# EUROPEAN PATENT APPLICATION

(11) **EP 4 524 751 A1**
(43) Date of publication of application: **19.03.2025**
(21) Application number: 22941620.1
(22) Date of filing: 10.05.2022
(51) Int. Cl.: G06F 11/36

(54) **INSPECTION DEVICE, INSPECTION SYSTEM, INSPECTION METHOD, AND PROGRAM**

(71) Applicant: Sony Interactive Entertainment Inc., Tokyo 108-0075 (JP)
(72) Inventor: OTO, Tomohiro, Tokyo 108-0075 (JP); HORIKAWA, Tsutomu, Tokyo 108-0075 (JP); YABE, Hiroyuki, Tokyo 108-0075 (JP); MIYAUCHI, Yutaro, Tokyo 108-0075 (JP)
(74) Representative: Müller Hoffmann & Partner
(86) International application number: PCT/JP2022/019849
(87) International publication number: WO 2023/218538

(57) **Abstract**

Automatic determination of whether correct behavior is being executed in a game is enabled. A first status data acquisition section (111) acquires first status data indicating a status at a first timing in a game. A predicted status data generation section (114) generates predicted status data on the basis of the first status data and operation data. A similarity determination section (115) determines the similarity between the data indicating the status in the game and the predicted status data. A determination result output section (116) outputs information based on the similarity as information relating to the behavior of the game.

## Description

### [Technical Field]

The present disclosure relates to an inspection apparatus for a game program, an inspection system, an inspection method, and a program.

### [Background Art]

Conventionally, a Quality Assurance test (referred to simply as a QA test) is executed as a test for detecting a defect (hereinafter, referred to as a bug) of a game program. PTL 1 cited below describes the following technique. An AI bot that automatically selects action with a high possibility of being employed by the human is created by generating a neural network model by use of game logs accumulated according to a progress status of a game executed by a game program and constructing a mechanism to compute a human-like play. Furthermore, by causing this AI bot to repeat a test play of the game, a bug with a high probability of being encountered by a user is preferentially found.

### [Citation List]

### [Patent Literature]

[PTL 1]
JP 2019-164753A

### [Summary]

### [Technical Problem]

In the QA test of a game program, a technique that not only causes the AI bot to execute a test play, but also can check an execution status of the game program and automatically determine whether correct behavior is being executed in a game is also required.

An object of the present disclosure is to provide an inspection apparatus for a game program, an inspection system, an inspection method, and a program that can automatically determine whether correct behavior is being executed in a game.

### [Solution to Problem]

An inspection apparatus for a game program according to the present disclosure includes an inspection apparatus for a game program including a processor, and a memory that stores a command to be executed by the processor. The processor acquires first status data indicating a status at a first timing in a game, acquires operation data indicating operation at the first timing to the game, acquires second status data indicating a status at a timing after execution of the operation at the first timing in the game, generates predicted status data on a basis of the first status data and the operation data,
determines similarity between the second status data and the predicted status data, and outputs information based on the similarity as information relating to behavior of the game. This enables automatic determination of whether correct behavior is being executed in the game.

Furthermore, an inspection system for a game program according to the present disclosure includes a processor and a memory that stores a command to be executed by the processor. The processor acquires first status data indicating a status at a first timing in a game, acquires operation data indicating operation at the first timing to the game, acquires second status data indicating a status at a timing after execution of the operation at the first timing in the game, generates predicted status data on a basis of the first status data and the operation data, determines similarity between the second status data and the predicted status data, and outputs information based on the similarity as information relating to behavior of the game. This enables automatic determination of whether correct behavior is being executed in the game.

Moreover, an inspection method for a game program according to the present disclosure is an inspection method in which a processor acquires first status data indicating a status at a first timing in a game, acquires operation data indicating operation at the first timing to the game, acquires second status data indicating a status at a timing after execution of the operation at the first timing in the game, generates predicted status data on a basis of the first status data and the operation data, determines similarity between the second status data and the predicted status data, and outputs information based on the similarity as information relating to behavior of the game. This enables automatic determination of whether correct behavior is being executed in the game.

Furthermore, a program according to the present disclosure causes a computer to execute a procedure of acquiring first status data indicating a status at a first timing in a game, a procedure of acquiring operation data indicating operation at the first timing to the game, a procedure of acquiring second status data indicating a status at a timing after execution of the operation at the first timing in the game, a procedure of generating predicted status data on a basis of the first status data and the operation data, a procedure of determining similarity between the second status data and the predicted status data, and a procedure of outputting information based on the similarity as information relating to behavior of the game. This enables automatic determination of whether correct behavior is being executed in the game by use of the computer.

### [Brief Description of Drawings]

[FIG. 1]

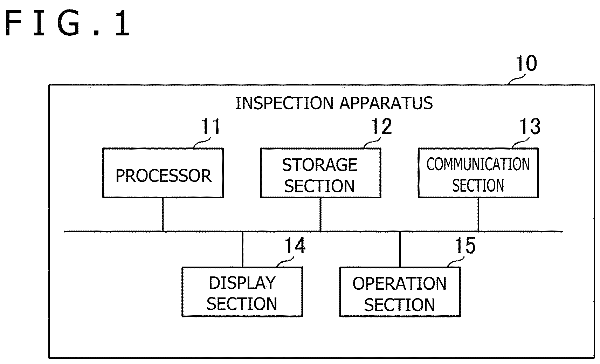

   FIG. 1 is a diagram illustrating one example of a hardware configuration of an inspection apparatus that is one example of an embodiment of the present disclosure.
[FIG. 2]

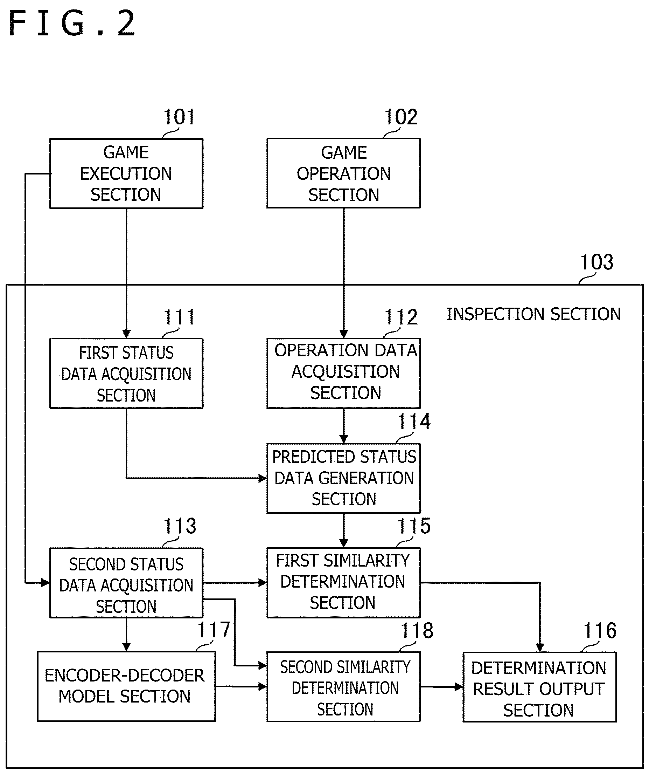

   FIG. 2 is a functional block diagram illustrating one example of functions implemented in the inspection apparatus.
[FIG. 3]

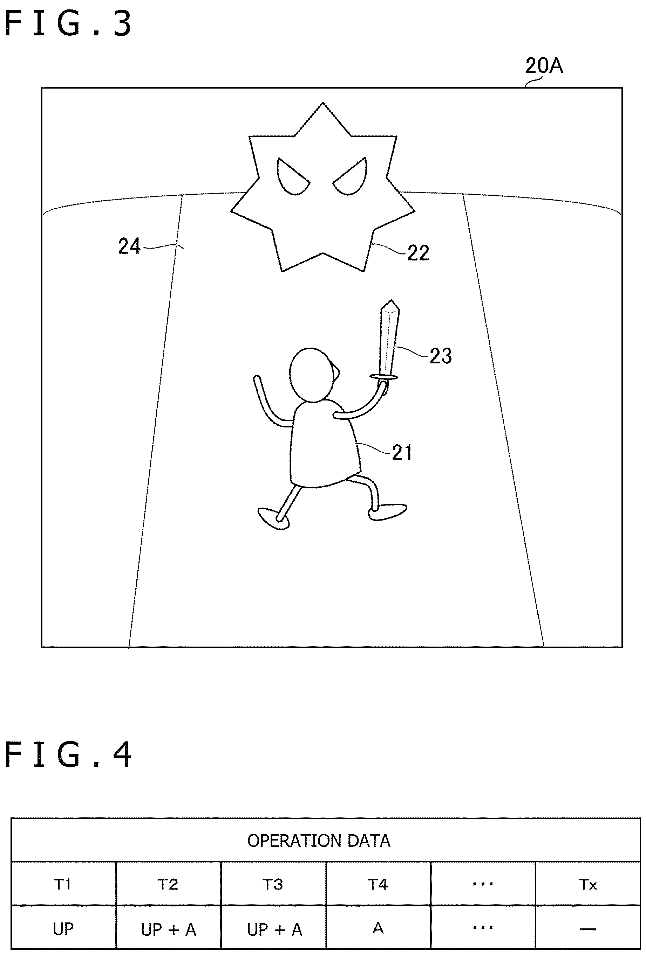

   FIG. 3 is a diagram illustrating one example of image data included in first status data.
[FIG. 4]
   FIG. 4 is a diagram illustrating one example of operation data.
[FIG. 5A]

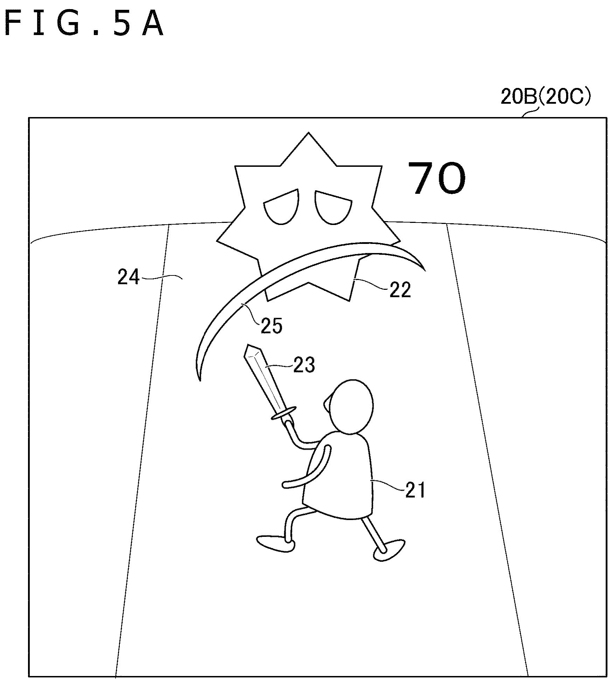

   FIG. 5A is a diagram illustrating one example of image data included in second status data.
[FIG. 5B]

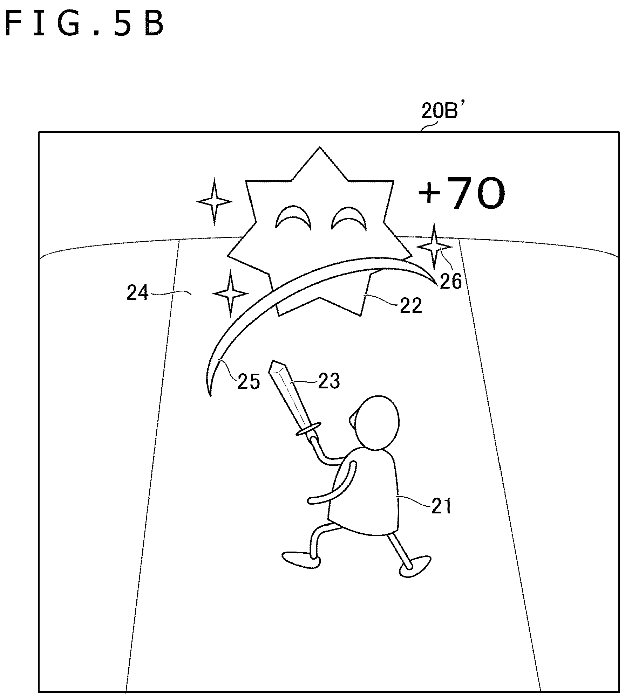

   FIG. 5B is a diagram illustrating another example of the image data included in the second status data.
[FIG. 6]

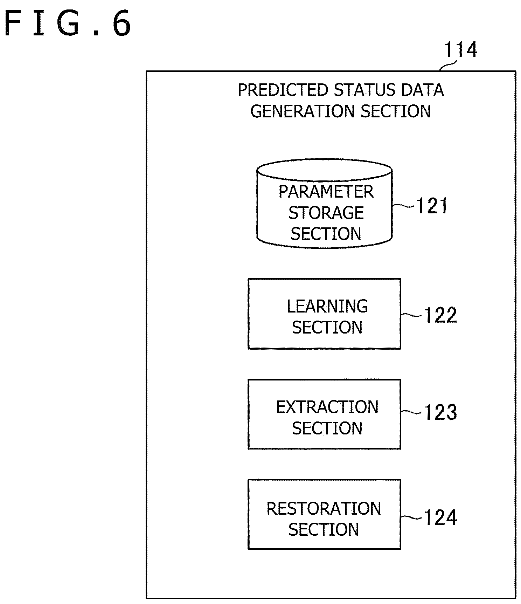

   FIG. 6 is a diagram illustrating one example of functions included in a predicted status data generation section.
[FIG. 7]

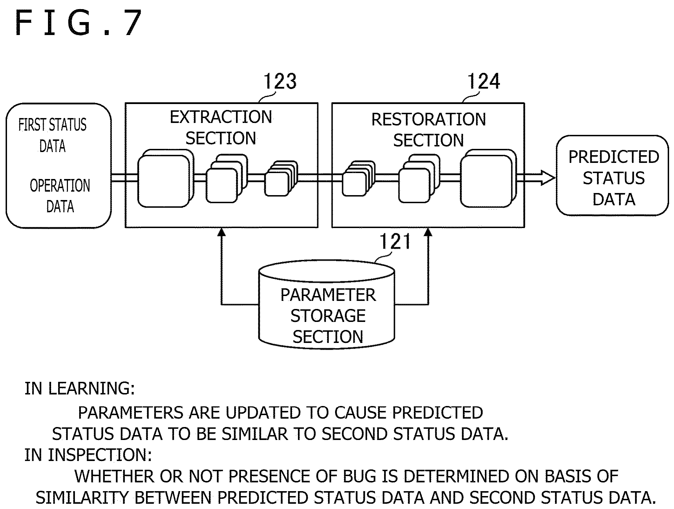

   FIG. 7 is a diagram illustrating one example of output processing of predicted status data by the predicted status data generation section.
[FIG. 8]

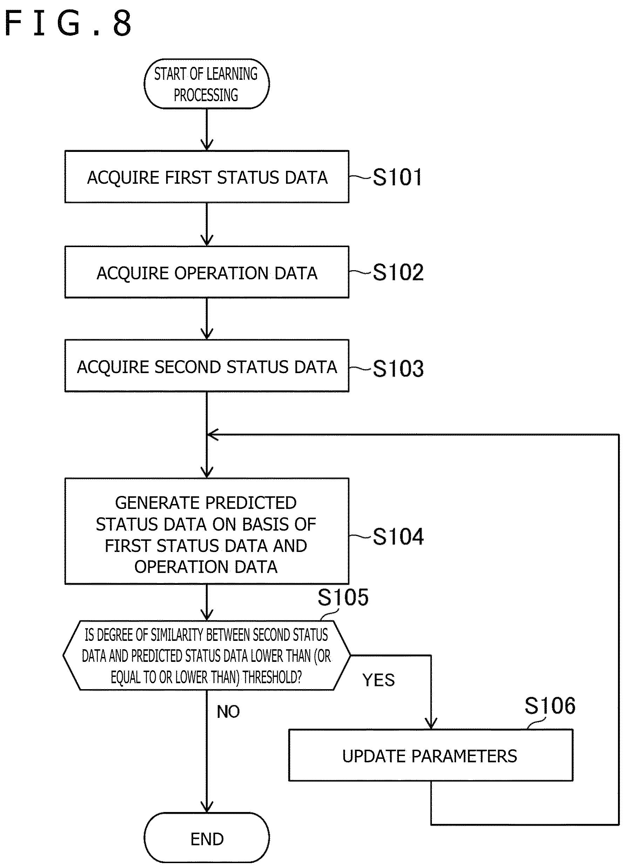

   FIG. 8 is a diagram illustrating one example of a flow of learning processing executed in the inspection apparatus.
[FIG. 9]

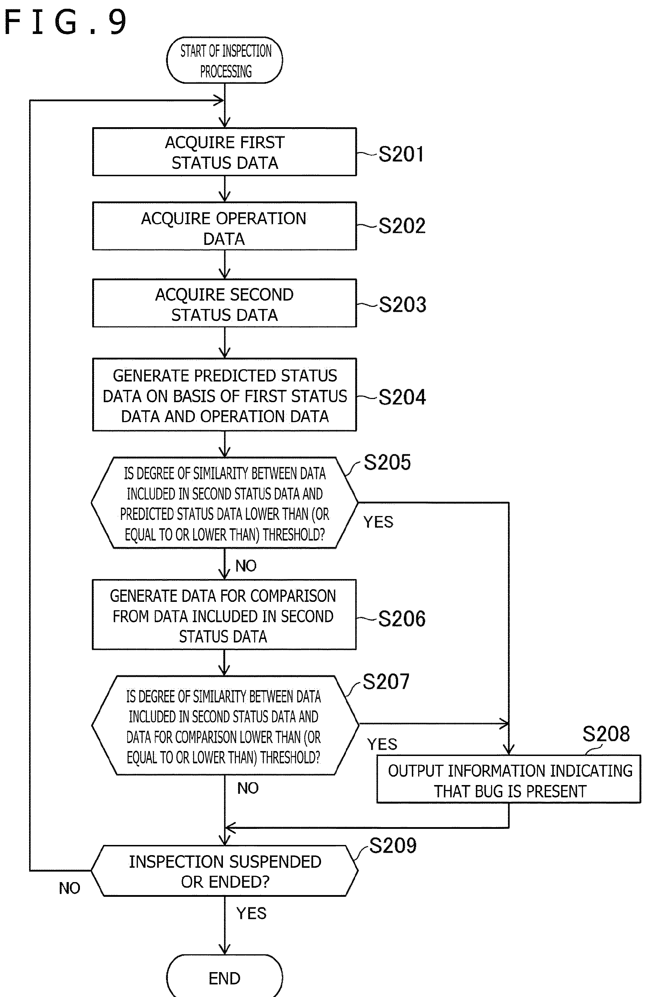

   FIG. 9 is a diagram illustrating one example of a flow of inspection processing executed in the inspection apparatus.

### [Description of Embodiment]

An embodiment of the present disclosure will be described below with reference to the drawings. An inspection apparatus according to the present embodiment is configured to be capable of determining whether correct behavior is being executed in response to operation of a game in execution of a game program and automatically outputting information indicating that a bug of the game has been sensed in a case in which it is determined that incorrect behavior is being executed.

### <1. Hardware Configuration>

FIG. 1 is a diagram illustrating one example of a hardware configuration of an inspection apparatus 10 (inspection system). The inspection apparatus 10 is, for example, a computer such as a personal computer and may include a processor 11, a storage section 12, a communication section 13, a display section 14, and an operation section 15 as illustrated in FIG. 1.

For example, the processor 11 is a program control device such as a CPU (Central Processing Unit) that operates in accordance with a program installed on the inspection apparatus 10 that is the computer. The storage section 12 is a storage (memory) such as a ROM (Read Only Memory), a RAM (Random Access Memory), an SSD (Solid State Drive), or an HDD (Hard Disk Drive). Data such as a program to be executed by the processor 11 is stored in the storage section 12. The communication section 13 is a communication interface such as a network board, for example. The display section 14 is a display device such as a liquid crystal display or an organic EL (Electro Luminescence) display, and displays various images in accordance with an instruction by the processor 11. The operation section 15 is a user interface such as a keyboard, a mouse, or a game controller, and accepts an operation input by a user and outputs a signal indicating the contents thereof to the processor 11.

Besides, the inspection apparatus 10 may include an optical disc drive that reads an optical disc, video output terminals such as an HDMI (High Definition Multimedia Interface) (registered trademark), data input/output terminals such as an USB (Universal Serial Bus), and sound output terminals such as a speaker and an earphone jack.

### <2. Functional Blocks>

FIG. 2 is a functional block diagram illustrating one example of functions implemented in the inspection apparatus 10. As illustrated in FIG. 2, the inspection apparatus 10 includes a game execution section 101, a game operation section 102, and an inspection section 103 in terms of functions. These functions may be implemented mainly by the processor 11. Furthermore, in the inspection apparatus 10, all of the functions illustrated in FIG. 2 do not need to be implemented, and a function other than the functions illustrated in FIG. 2 may be implemented.

The game execution section 101 executes a game program stored in the storage section 12, and outputs information relating to an execution status of the game program, which will be described later (that is, a status of a game). The game execution section 101 may execute a game program stored in another storage apparatus connected through the communication section 13 or the like. The game execution section 101 may cause the storage section 12 or another storage apparatus to store information relating to the status of a game. Furthermore, the game execution section 101 may generate image data representing a state of a virtual game space as the status of a game, and cause a display apparatus such as the display section 14 to display an image.

The game operation section 102 executes operation by a user to the game that is being executed by the game execution section 101. The game operation section 102 executes operation for moving game objects such as characters, cursors, and icons that are operation targets in the virtual game space output on the display apparatus such as the display section 14. For example, the game operation section 102 executes operation of automatically moving the game objects in accordance with a given program. Moreover, the game operation section 102 may execute operation to the game objects in accordance with instruction information (what is generally called a command) generated by an AI bot. Besides, the game operation section 102 may execute operation to the game objects in accordance with instruction information input by a user through the operation section 15 such as a game controller.

The inspection section 103 verifies whether correct behavior is being executed in a game that is being executed by the game execution section 101. As illustrated in FIG. 2, for example, the inspection section 103 includes a first status data acquisition section 111, an operation data acquisition section 112, a second status data acquisition section 113, a predicted status data generation section 114, a first similarity determination section 115, a determination result output section 116, an encoder-decoder model section 117, and a second similarity determination section 118. These functions may be implemented mainly by the processor 11. Furthermore, the inspection section 103 may include a function other than the functions illustrated in FIG. 2.

### <2-1. First Status Data Acquisition Section>

The first status data acquisition section 111 acquires first status data indicating a status at a given timing (first timing) in a game. The first status data acquisition section 111 acquires the first status data including data such as image data indicating the status of the game. For example, the first status data acquisition section 111 acquires data including image data output to the display section 14 and the like by the game execution section 101 as the first status data.

Besides, for example, the first status data acquisition section 111 may acquire the first status data including sound data for outputting sound of a game. Alternatively, the first status data acquisition section 111 may acquire the first status data including the positions of game objects (a character that is an operation target, a fellow character, an enemy character, and the like) and the directions in which the game objects are oriented in a virtual game space, parameters indicating the vitality, equipment, the strength, and the like as a character, the position and the orientation of a camera that is the point of view in the game space, a flag value indicating whether or not a predetermined event in a game has been achieved, or the like.

FIG. 3 is a diagram illustrating one example of the data included in the first status data, and illustrates an example of a case in which the data included in the first status data is image data 20A. For example, the image data 20A may include a character 21 that is an operation target for a user (hereinafter, referred to also as a user character 21), and may include a character 22 that is an enemy of the user character 21 (hereinafter, referred to also as an enemy character 22), game objects of obstacles, and the like. In the example of the image data 20A illustrated in FIG. 3, the state in which the user character 21 that grasps a weapon 23 faces the enemy character 22 on a field 24 that is a ground surface in a game space is illustrated.

### <2-2. Operation Data Acquisition Section>

The operation data acquisition section 112 acquires operation data indicating operation to a game (for example, operation executed by the game operation section 102). The operation data acquisition section 112 acquires the operation data indicating operation at the timing (first timing) at which the first status data acquisition section 111 has acquired the first status data. "Operation at the first timing" is operation executed in a predetermined period from the first timing (for example, within a predetermined number of frames from the frame in which the first status data acquisition section 111 has acquired the first status data). For example, the operation data acquisition section 112 may acquire the operation data within one frame from the timing at which the first status data acquisition section 111 has acquired the first status data, or acquire the operation data within two to ten frames from the timing at which the first status data acquisition section 111 has acquired the first status data.

FIG. 4 is a diagram illustrating one example of the operation data acquired by the operation data acquisition section 112. As illustrated in FIG. 4, for example, the operation data acquisition section 112 acquires the operation data indicating the contents of operation in each unit frame (for example, one frame) over a period from a frame T1 in which the first status data acquisition section 111 has acquired the first status data to a frame Tx. Note that the operation data acquisition section 112 may acquire the operation data indicating the contents of operation in each set of a plurality of unit frames (for example, two to ten frames) from the frame T1 in which the first status data acquisition section 111 has acquired the first status data.

In the example illustrated in FIG. 4, it is indicated that the operation executed in the frame T1 is operation of an upward direction key and the operation executed in a frame T2 later than the frame T1 by the unit frame is operation of the upward direction key and an A-button (button to instruct the user character 21 to attack). Furthermore, it is indicated that operation of the upward direction key and the A-button is executed in a frame T3 whereas the operation of the upward direction key is deactivated and operation of the A-button is executed in a frame T4. Moreover, it is indicated that operation is not executed in the frame Tx.

Note that the operation data is not limited to the contents of input of keys illustrated in FIG. 4. The operation data may include instruction information such as a command for causing a game object to make predetermined behavior (for example, a skill command for causing a game character to activate a skill). Alternatively, the operation data may include information such as a value based on the output of a sensor (for example, a gyro sensor or an acceleration sensor) mounted in the operation section 15.

### <2-3. Second Status Data Acquisition Section>

The second status data acquisition section 113 acquires second status data indicating the status at a timing after execution of operation by the game operation section 102 at the timing (first timing) at which the first status data acquisition section 111 has acquired the first status data. For example, the second status data acquisition section 113 acquires the second status data at the timing of a frame Tx+1 (a timing later than the frame Tx by the unit frame) at the elapse of the period indicated by the operation data acquired by the operation data acquisition section 112 (the period from the frame T1 to the frame Tx) from the timing of the frame T1 (see FIG. 4) at which the first status data acquisition section 111 has acquired the first status data. The second status data acquisition section 113 may acquire, as the second status data, image data, sound data, or data including the positions of game objects and the directions in which the game objects are oriented, parameters in a case in which a game object is a character, the position and the orientation of a camera, a flag value indicating the achievement status of an event, or the like.

The second status data acquisition section 113 acquires the second status data including the same kind of data as the data included in the first status data. In the present embodiment, the first status data acquisition section 111 acquires the first status data including image data of a game. Furthermore, the second status data acquisition section 113 acquires the second status data including image data of the game.

FIG. 5A is a diagram illustrating one example of the image data included in the second status data. For example, the second status data acquisition section 113 may acquire image data 20B including the user character 21, the enemy character 22, and game objects of obstacles. In the example of the image data 20B of FIG. 5A, the following state is illustrated. The user character 21 attacks the enemy character 22 with the weapon 23. This generates an effect 25 of the attack overlapping with the enemy character 22, and the enemy character 22 suffers damage of "70." In the example of FIG. 5A, the state in which the game is correctly behaving is illustrated.

FIG. 5B is a diagram illustrating another example of the image data included in the second status data. In the example of image data 20B' of FIG. 5B, the following state is illustrated. When the user character 21 attacks the enemy character 22 with the weapon 23, the enemy character 22 recovers by "+ 70" without suffering damage, and an effect 26 of the recovery is generated around the enemy character 22. That is, in the example of FIG. 5B, the state in which a bug has occurred in the game is illustrated.

### <2-4. Predicted Status Data Generation Section>

The predicted status data generation section 114 generates predicted status data on the basis of the first status data acquired by the first status data acquisition section 111 and the operation data acquired by the operation data acquisition section 112. In the present embodiment, the predicted status data generation section 114 generates image data as the predicted status data. For example, the predicted status data generation section 114 generates image data 20C similar to the image data 20B illustrated in FIG. 5A in a case in which the game is correctly behaving on the basis of the image data 20A illustrated in FIG. 3 and data such as the positions and the orientations of game objects and parameters included in the first status data and the operation data illustrated in FIG. 4.

FIG. 6 is a diagram illustrating one example of functions included in the predicted status data generation section 114. As illustrated in FIG. 6, for example, the predicted status data generation section 114 includes a parameter storage section 121, a learning section 122, an extraction section 123, and a restoration section 124. The learning section 122, the extraction section 123, and the restoration section 124 may be implemented mainly by the processor 11. The parameter storage section 121 may be implemented mainly by the storage section 12, or be implemented mainly by another storage apparatus connected through the communication section 13 or the like. Moreover, the predicted status data generation section 114 may include a function other than the functions illustrated in FIG. 6.

In the example illustrated in FIG. 6, the predicted status data generation section 114 is a machine learning model trained, by the learning section 122, with a plurality of pieces of training data each including the first status data indicating the status in a game, the operation data indicating operation to the game in this status, and the second status data indicating the status in the game after execution of this operation. The parameter storage section 121 of the predicted status data generation section 114 stores parameters of the machine learning model updated by the learning section 122.

FIG. 7 is a diagram illustrating one example of output processing of the predicted status data by the predicted status data generation section 114. The extraction section 123 of the predicted status data generation section 114 extracts a plurality of pieces of feature data from the first status data and the operation data on the basis of the parameters stored in the parameter storage section 121. The restoration section 124 of the predicted status data generation section 114 generates the same kind of data (for example, image data) as the data included in the first status data as the predicted status data on the basis of the parameters stored in the parameter storage section 121 and the plurality of pieces of feature data extracted by the extraction section 123.

At the time of learning of the predicted status data generation section 114, which is the machine learning model, the learning section 122 compares the predicted status data output from the restoration section 124 with the second status data in the case in which a game is correctly behaving by inputting, to the extraction section 123, the first status data indicating the status of the game at a timing at which the game is correctly behaving and the operation data. Then, when the degree of similarity between the predicted status data and the second status data does not satisfy a predetermined condition (when it is determined that they are not similar), the learning section 122 updates the parameters stored in the parameter storage section 121. The learning section 122 repeats the above processing until the degree of similarity between the predicted status data and the second status data satisfies the predetermined condition (until it is determined that they are similar). That is, the learning section 122 updates the parameters stored in the parameter storage section 121 to cause the predicted status data generated by the extraction section 123 and the restoration section 124 to be similar to the second status data input to the predicted status data generation section 114. The learning section 122 executes the above processing on the basis of each of the plurality of pieces of training data. This allows the predicted status data generation section 114 to generate the predicted status data indicating the status of the game in the case in which the game is correctly behaving on the basis of the first status data in the case in which the game is correctly behaving.

Furthermore, when the first status data acquired by the first status data acquisition section 111 is input at a timing at which a bug has already occurred in the game, the predicted status data generation section 114 may generate data (hereinafter, referred to also as abnormal data) that deviates from data indicating the actual status of the game on the basis of the first status data. By using the training data that does not include the first status data acquired at a timing at which a bug has occurred in the game at the time of learning by the learning section 122, the predicted status data generation section 114 becomes capable of generating the abnormal data in a case in which the first status data at a timing at which a bug has occurred in the game is input at the time of verification of a game program.

### <2-5. First Similarity Determination Section, Determination Result Output Section>

At the time of inspection of a game program, the first similarity determination section 115 determines the similarity between the second status data acquired by the second status data acquisition section 113 and the predicted status data generated by the predicted status data generation section 114. Then, the determination result output section 116 outputs information based on the similarity determined by the first similarity determination section 115 as information relating to the behavior of a game. In a case in which it is determined that the pieces of data are not similar in the first similarity determination section 115, the determination result output section 116 outputs information indicating that a bug is present in the behavior of the game. That is, the first similarity determination section 115 determines whether or not a bug is present by determining the similarity between the second status data and the predicted status data. Note that the determination result output section 116 may output the notification indicating that a bug is present by causing the display section 14 to display it or output the notification by causing another display apparatus connected through the communication section 13, a video output terminal, or the like to display it.

For example, the first similarity determination section 115 determines that the second status data and the predicted status data are similar when the degree of similarity between them is equal to or higher than a predetermined threshold (or in a case in which the degree of similarity exceeds the threshold), and determines that they are dissimilar in a case in which the degree of similarity is lower than the threshold (or in a case in which the degree of similarity is equal to or lower than the threshold). For example, the first similarity determination section 115 may determine the similarity by executing image comparison between image data included in the second status data and the predicted status data. The first similarity determination section 115 may compute the degree of similarity between the image data included in the second status data and the predicted status data in accordance with a given image comparison method such as the squared error (MSE: Mean Squared Error).

Moreover, the first similarity determination section 115 may dispose an image of the image data included in the second status data and an image indicated by the predicted status data in a given feature space, and compute the degree of similarity between the second status data and the predicted status data on the basis of the distance between the images in the feature space. The predicted status data generation section 114 may output the feature of an image as the predicted status data. In this case, the first similarity determination section 115 may compute the feature of an image indicated by the second status data, and compute the degree of similarity between the second status data and the predicted status data on the basis of the feature of the image indicated by the second status data and the feature that is the predicted status data output by the predicted status data generation section 114. The "image comparison" in the present disclosure can include the above computation methods for the degree of similarity between images.

When a bug has occurred in a game at a timing at which the second status data acquisition section 113 acquires the second status data, data (for example, image data 20B' illustrated in FIG. 5B) dissimilar from data (for example, image data 20B illustrated in FIG. 5A) acquired in the case in which the game is correctly behaving is acquired. Thus, it becomes possible to automatically determine whether correct behavior is being executed in a game by the following operation. Specifically, the predicted status data generation section 114 generates the predicted status data in the case in which the game is correctly behaving on the basis of the first status data indicating the status of the game at a timing at which the game is correctly behaving and the operation data indicating operation at the timing. Furthermore, the first similarity determination section 115 determines the similarity between the predicted status data thus generated and data such as image data included in the second status data acquired after the timing of this first status data.

As described above, the predicted status data generation section 114 may generate the abnormal data that deviates from data indicating the actual status of a game when a bug has already occurred in the game at a timing at which the first status data is acquired. In this case, the first similarity determination section 115 compares the second status data indicating the status of the game with the abnormal data, and thereby determines that they are dissimilar. That is, it can be determined that a bug has already occurred in the game.

### <2-6. Encoder-decoder Model Section>

The encoder-decoder model section 117 (second generation means) generates data (second data) for comparison by converting data (first data) such as image data included in the second status data in accordance with predetermined parameters. For example, the encoder-decoder model section 117 generates the data for comparison by converting the data included in the second status data by an encoder-decoder model (in accordance with model parameters of the encoder-decoder model).

The encoder-decoder model is a machine learning model trained by a plurality of training data including image data and the like indicating the status in a game. At the time of learning of the encoder-decoder model section 117, parameters of the encoder-decoder model section 117 stored in the storage section 12 are updated so as to generate data identical or similar to the training data input to the encoder-decoder model section 117. The encoder-decoder model section 117 extracts (compresses) a plurality of pieces of feature data from the data included in the second status data on the basis of the trained parameters stored in the storage section 12, and generates (restores) the data for comparison on the basis of the plurality of pieces of feature data.

For example, the encoder-decoder model section 117 outputs, as the data for comparison, image data arising from compression and restoration from image data included in the second status data. Besides, the encoder-decoder model section 117 may output, as the data for comparison, data arising from compression and restoration from sound data included in the second status data or data including the positions of game objects and the directions in which the game objects are oriented, parameters in the case in which a game object is a character, the position and the orientation of a camera, a flag value indicating the achievement status of an event, or the like.

The encoder-decoder model section 117 uses data acquired at a timing at which a bug has not occurred in the game as a large number of training data for learning of the encoder-decoder model section 117. This allows the encoder-decoder model section 117 to output data that deviates from the actual status of the game as the data for comparison in a case in which data at a timing at which a bug has occurred in the game is input. In a case in which the second status data is acquired by the second status data acquisition section 113 at a timing at which a bug has occurred in a game, the encoder-decoder model section 117 generates the data for comparison that deviates from the actual status of the game on the basis of data included in the second status data.

### <2-7. Second Similarity Determination Section>

At the time of inspection of a game program, the second similarity determination section 118 determines the similarity between data such as image data included in the second status data acquired by the second status data acquisition section 113 and the data for comparison generated by the encoder-decoder model section 117. Then, the determination result output section 116 outputs information based on the similarity determined by the second similarity determination section 118 as information relating to the behavior of a game. As described above, the determination result output section 114 outputs information indicating that a bug is present in the behavior of the game in a case in which it is determined that pieces of data are not similar in the first similarity determination section 113. Furthermore, the determination result output section 116 outputs information indicating that a bug is present in the behavior of the game also in a case in which it is determined that the pieces of data are not similar in the second similarity determination section 118. That is, the second similarity determination section 118 determines whether or not a bug is present by determining the similarity between the data included in the second status data and the data for comparison.

For example, the second similarity determination section 118 determines that the data such as image data included in the second status data and the data for comparison generated by the encoder-decoder model section 117 are similar when the degree of similarity between them is equal to or higher than a predetermined threshold (or in a case in which the degree of similarity exceeds the threshold), and determines that they are dissimilar in a case in which the degree of similarity is lower than the threshold (or in a case in which the degree of similarity is equal to or lower than the threshold). The second similarity determination section 118 may compute the degree of similarity between the image data included in the second status data and the data for comparison that is image data in accordance with a given image comparison method such as the squared error, similarly to the first similarity determination section 115. As described above, in a case in which a bug has already occurred in a game, the encoder-decoder model section 117 generates the data for comparison that deviates from the actual status of the game. Thus, whether or not a bug has occurred in the game can be determined through determination of the similarity between the data included in the second status data and the data for comparison by the second similarity determination section 118.

### <3. Flowchart>

FIG. 8 is a diagram illustrating one example of a flow of learning processing of the predicted status data generation section 114 executed in the inspection apparatus 10. FIG. 9 is a diagram illustrating one example of a flow of inspection processing executed in the inspection apparatus 10. In the following, the flows of the learning processing and the inspection processing executed in the inspection apparatus 10 will be described on the basis of FIGS. 8 and 9.

### <3-1. Learning Processing>

As illustrated in FIG. 8, at the time of learning of the predicted status data generation section 114, the first status data acquisition section 111 acquires the first status data indicating the status in a game (step S101). Subsequently, the operation data acquisition section 112 acquires the operation data indicating operation at the timing of step S101 (for example, the timing of the frame T1) (step S102). In step S102, the operation data acquisition section 112 may acquire the operation data in a predetermined period from the timing of step S101 (for example, the period from the frame T1 to the frame Tx).

Subsequently, the second status data acquisition section 113 acquires the second status data indicating the status of the game at a timing after the timing of step S101 (step S103). In step S103, the second status data acquisition section 113 may acquire the second status data indicating the status of the gate at a timing (for example, a timing of the frame Tx+1) after execution of the operation indicated by the operation data acquired in step S102.

In step S101, the first status data acquisition section 111 acquires the first status data including data such as image data indicating the status of the game. In step S103, the second status data acquisition section 113 acquires the same kind of data (image data or the like) as the data included in the first status data as the second status data. In the learning processing of the predicted status data generation section 114, in step S101, the first status data acquisition section 111 acquires the first status data in a case in which a bug has not occurred in the game. In step S103, the second status data acquisition section 113 acquires the second status data in the case in which a bug has not occurred in the game.

Subsequently, the predicted status data generation section 114 generates the predicted status data on the basis of the first status data acquired in step S101 and the operation data acquired in step S102 (step S104). In step S104, the extraction section 123 of the predicted status data generation section 114 extracts a plurality of pieces of feature data from the first status data and the operation data on the basis of the parameters stored in the parameter storage section 121. The restoration section 124 of the predicted status data generation section 114 generates the predicted status data by restoring the same kind of data as the data included in the first status data (that is, the same kind of data as the second status data) from the plurality of pieces of feature data extracted by the extraction section 123 on the basis of the parameters stored in the parameter storage section 121.

Subsequently, the learning section 122 of the predicted status data generation section 114 determines whether or not the degree of similarity between the second status data acquired in step S103 and the predicted status data generated in step S104 is lower than the predetermined threshold (or whether or not the degree of similarity is equal to or lower than the predetermined threshold) (step S105). In a case in which the degree of similarity between the second status data and the predicted status data is lower than (or equal to or lower than) the predetermined threshold (YES of step S105), the learning section 122 of the predicted status data generation section 114 updates the parameters stored in the parameter storage section 121 (step S106) and repeats the processing of step S104 and step S105.

In a case in which the degree of similarity between the second status data and the predicted status data is equal to or higher than the threshold (or in a case in which the degree of similarity is higher than the threshold) in step S105 (NO of step S105), the learning section ends the learning processing. By repeating the above learning processing by the number of training data, the predicted status data generation section 114 becomes capable of generating the predicted status data indicating the status of the game in the case in which the game is correctly behaving on the basis of the first status data and the second status data in the case in which the game is correctly behaving.

Note that learning processing similar to the learning processing of the predicted status data generation section 114 illustrated in FIG. 8 may be executed in the encoder-decoder model section 117. In this case, without executing the processing of steps S102 and S103, in step S104, the encoder-decoder model section 117 may extract a plurality of pieces of feature data from data such as image data included in the first status data on the basis of parameters stored in the storage section 12 and generate the data for comparison by restoring image data or the like from the plurality of feature data extracted. Furthermore, in step S105, it may be determined whether or not the degree of similarity between data included in the first status data acquired in step S101 and the data for comparison generated in step S104 is lower than a predetermined threshold (or whether or not the degree of similarity is equal to or lower than the predetermined threshold). In a case in which the degree of similarity is lower than (or equal to or lower than) the predetermined threshold, the parameters of the encoder-decoder model section 117 stored in the storage section 12 may be updated. This allows the encoder-decoder model section 117 to generate the data for comparison indicating the status of the game in the case in which the game is correctly behaving on the basis of the first status data in the case in which the game is correctly behaving and generate the data for comparison that deviates from the actual status of the game on the basis of the first status data in the case in which a bug has occurred in the game.

### <3-2. Inspection Processing>

As illustrated in FIG. 9, at the time of inspection of a game program, the first status data acquisition section 111 acquires the first status data indicating the status in a game, similarly to the time of learning of the predicted status data generation section 117 (step S201). Subsequently, the operation data acquisition section 115 acquires the operation data indicating operation at the timing of the first status data (step S202), and the second status data acquisition section 116 acquires the second status data indicating the status of the game at a timing later than the timing of the first status data (step S203).

In step S202, the operation data acquisition section 115 may acquire the operation data indicating operation at the timing of step S201 (for example, the timing of the frame T1). In step S202, the operation data acquisition section 115 may acquire the operation data in a predetermined period from the timing of step S201 (for example, the period from the frame T1 to the frame Tx). Furthermore, in step S203, the second status data acquisition section 116 may acquire the second status data indicating the status of the gate at a timing (for example, the timing of the frame Tx+1) after execution of the operation indicated by the operation data acquired in step S202. In step S203, the second status data acquisition section 116 acquires the second status data including the same kind of data as data such as image data included in the first status data acquired in step S201.

Subsequently, the predicted status data generation section 114 generates the predicted status data on the basis of the first status data acquired in step S201 and the operation data acquired in step S202 (step S204). In step S204, the predicted status data generation section 114 extracts a plurality of pieces of feature data from the first status data and the operation data on the basis of the parameters stored in the parameter storage section 121, similarly to step S104. Then, the predicted status data generation section 114 generates the same kind of data as the data such as image data included in the first status data (same kind of data as the second status data) as the predicted status data by restoring data from the extracted feature data on the basis of the parameters stored in the parameter storage section 121.

In a case in which a bug has not occurred in the game at the timing of step S201, the predicted status data generation section 114 generates the predicted status data indicating the status of the game in the case in which the game is correctly behaving in step S204. Moreover, in a case in which a bug has already occurred in the game at the timing of step S201, the predicted status data generation section 114 may generate the abnormal data that deviates from data indicating the actual status of the game in step S204.

Subsequently, the first similarity determination section 115 determines whether or not the degree of similarity between the second status data acquired in step S203 and the predicted status data generated in step S203 is lower than a predetermined threshold (or whether or not the degree of similarity is equal to or lower than the predetermined threshold) (step S205). In a case in which the degree of similarity between the second status data and the predicted status data is lower than (or equal to or lower than) the predetermined threshold, that is, in a case in which it is determined by the first similarity determination section 115 that a bug has occurred in the game at the timing of any of steps S201 to S203 (YES of step S205), the determination result output section 116 outputs information indicating that a bug is present (step S208). In step S208, the determination result output section 116 may output the notification indicating that a bug is present by causing the display section 14 to display it, or output the notification by causing another display apparatus connected through the communication section 13, a video output terminal, or the like to display it.

In a case in which the degree of similarity between the second status data and the predicted status data is not lower than (or equal to or lower than) the predetermined threshold (NO of step S205), the encoder-decoder model section 117 generates the data for comparison from the data such as image data included in the second status data acquired in step S203 (step S206). For example, the encoder-decoder model section 117 generates the data for comparison by extracting a plurality of pieces of feature data from the data such as image data included in the second status data and restoring the same kind of data as the data included in the second status data from the plurality of pieces of feature data.

In a case in which a bug has not occurred in the game at the timing of step S203, in step S206, the encoder-decoder model section 117 generates the data for comparison identical or similar to the data included in the second status data acquired in step S203. Furthermore, in a case in which a bug has already occurred in the game at the timing of step S203, the encoder-decoder model section 117 generates data that deviates from the actual status of the game in step S206.

Subsequently, the second similarity determination section 118 determines whether or not the degree of similarity between the data included in the second status data acquired in step S203 and the data for comparison generated in step S206 is lower than a predetermined threshold (or whether or not the degree of similarity is equal to or lower than the predetermined threshold) (step S207). When the degree of similarity between the data included in the second status data and the data for comparison is lower than (or equal to or lower than) the predetermined threshold (YES of step S207), the determination result output section 116 outputs information indicating that a bug is present (step S208).

The generation processing of the predicted status data in step S204 and the determination processing by the first similarity determination section 115 in step S205 may be executed after the determination processing by the second similarity determination section 118 in step S207. In a case in which an instruction to suspend or end the inspection has not been accepted (NO of step S209), the processor 11 of the inspection apparatus 10 continues the inspection processing by repeating the processing of steps S201 to S208. By accepting the instruction to suspend or end the inspection (YES of step S209), the processor 11 of the inspection apparatus 10 ends the inspection processing.

### <4. Summarization>

As above, in the present embodiment, the first status data acquisition section 111 acquires the first status data indicating the status at the first timing in a game. The operation data acquisition section 112 acquires the operation data indicating operation at the first timing to the game. The second status data acquisition section 113 acquires the second status data indicating the status at a timing after execution of operation at the first timing in the game. Then, the predicted status data generation section 114 generates the predicted status data on the basis of the first status data and the operation data. The first similarity determination section 115 determines the similarity between the second status data and the predicted status data. That is, it becomes possible to automatically determine whether correct behavior is being executed in the game in the first similarity determination section 115.

Furthermore, in the present embodiment, the encoder-decoder model section 117 generates the data for comparison by converting data such as image data included in the second status data acquired by the second status data acquisition section 113 by an encoder-decoder model. Then, the second similarity determination section 118 determines the similarity between the second status data and the data for comparison. In a case in which a bug has occurred in the game, the encoder-decoder model section 117 generates data that deviates from the actual status of the game. Thus, it becomes possible to automatically determine whether correct behavior is being executed in the game in the second similarity determination section 118.

The present invention is not limited to the above embodiment. For example, examples arising from modification from the embodiment described above can also be included in the technical scope of the present invention.

(1) In the embodiment, the example in which the predicted status data generation section 114 is a machine learning model trained by a plurality of pieces of training data has been described. However, the predicted status data generation section 114 may generate the predicted status data from the first status data and the operation data in accordance with a predetermined rule, for example. In this case, the predicted status data generation section 114 may not need to include the learning section 122. Also in this example, whether correct behavior is being executed can be automatically determined through determination of the similarity between the second status data and the predicted status data by the first similarity determination section 115.
(2) In the embodiment, description has been made regarding the example in which the operation data acquisition section 112 acquires the operation data from the frame T1 in which the first status data acquisition section 111 has acquired the first status data to the frame Tx and the second status data acquisition section 113 acquires the second status data at the timing of the frame Tx+1 (timing later than the frame Tx by the unit frame (for example, one frame)) at the elapse of a predetermined period from the timing of the frame T1, in which the first status data acquisition section 111 has acquired the first status data. The present disclosure is not limited thereto. The operation data acquisition section 112 may acquire the operation data indicating operation executed at the timing of the frame T1, in which the first status data acquisition section 111 has acquired the first status data, and the second status data acquisition section 113 may acquire the second status data at the timing later by the unit frame than the frame T1, in which the first status data acquisition section 111 has acquired the first status data. Also in this example, through determination of the similarity between the second status data and the predicted status data by the first similarity determination section 115, whether correct behavior is being executed can be automatically determined on the basis of the first status data at the timing earlier by the unit frame and the operation data.
(3) Furthermore, the first status data acquisition section 111 may acquire a plurality of pieces of first status data. For example, the first status data acquisition section 111 may acquire the first status data in each unit frame over the period from the frame T1 in which the operation data acquisition section 112 acquires the operation data to the frame Tx**.** Moreover, the predicted status data generation section 114 may generate one predicted status data on the basis of the plurality of pieces of first status data acquired by the first status data acquisition section 111. Also in this example, whether correct behavior is being executed in the game can be automatically determined through determination of the similarity between the second status data and the predicted status data by the first similarity determination section 115.
(4) In the embodiment, description has been made regarding the example in which the first status data includes image data and the second status data is image data and the predicted status data generation section 114 generates image data as the predicted status data. The present disclosure is not limited thereto. The first status data may include data different from the image data (for example, sound data of a game, or the like), and the second status data and the predicted status data output by the predicted status data generation section 114 may be data different from the image data (for example, sound data). Also in this example, whether correct behavior is being executed in the game can be automatically determined through determination of the similarity between the second status data and the predicted status data by the first similarity determination section 115.

## Claims

1. An inspection apparatus for a game program, the inspection apparatus comprising:
a processor; and
a memory that stores a command to be executed by the processor,
wherein
the processor
acquires first status data indicating a status at a first timing in a game,
acquires operation data indicating operation at the first timing to the game,
acquires second status data indicating a status at a timing after execution of the operation at the first timing in the game,
generates predicted status data on a basis of the first status data and the operation data,
determines similarity between the second status data and the predicted status data, and
outputs information based on the similarity as information relating to behavior of the game.

2. The inspection apparatus for a game program according to claim 1, wherein
the processor generates the predicted status data by using a machine learning model trained by a plurality of pieces of training data each including first status data indicating a status in the game, operation data indicating operation to the game in the status, and second status data indicating a status in the game after execution of the operation.

3. The inspection apparatus for a game program according to claim 1, wherein
the second status data includes image data, and
the processor
generates image data as the predicted status data, and
determines the similarity by executing image comparison between the image data included in the second status data and the predicted status data.

4. The inspection apparatus for a game program according to claim 1, wherein
the second status data includes first data,
the processor generates second data by converting the first data included in the second status data by an encoder-decoder model, and
the processor outputs information based on similarity between the first data and the second data as information relating to the behavior of the game.

5. An inspection system for a game program, the inspection system comprising:
a processor; and
a memory that stores a command to be executed by the processor,
wherein
the processor
acquires first status data indicating a status at a first timing in a game,
acquires operation data indicating operation at the first timing to the game,
acquires second status data indicating a status at a timing after execution of the operation at the first timing in the game,
generates predicted status data on a basis of the first status data and the operation data,
determines similarity between the second status data and the predicted status data, and
outputs information based on the similarity as information relating to behavior of the game.

6. An inspection method for a game program, wherein
a processor
acquires first status data indicating a status at a first timing in a game,
acquires operation data indicating operation at the first timing to the game,
acquires second status data indicating a status at a timing after execution of the operation at the first timing in the game,
generates predicted status data on a basis of the first status data and the operation data,
determines similarity between the second status data and the predicted status data, and
outputs information based on the similarity as information relating to behavior of the game.

7. A program that causes a computer to execute:
a procedure of acquiring first status data indicating a status at a first timing in a game;
a procedure of acquiring operation data indicating operation at the first timing to the game;
a procedure of acquiring second status data indicating a status at a timing after execution of the operation at the first timing in the game;
a procedure of generating predicted status data on a basis of the first status data and the operation data;
a procedure of determining similarity between the second status data and the predicted status data; and
a procedure of outputting information based on the similarity as information relating to behavior of the game.
